# EUROPEAN PATENT APPLICATION

(11) **EP 0 855 141 A1**
(43) Date of publication of application: **29.07.1998**
(21) Application number: 97300332.0
(22) Date of filing: 20.01.1997
(51) Int. Cl.: A23G 1/20, A23G 9/06, A23G 9/04, A23P 1/02, A23P 1/10

(54) **Process for the manufacture of a food product**

(71) Applicant: UNILEVER PLC, London EC4P 4BQ (GB)
(72) Inventor: The designation of the inventor has not yet been filed
(74) Representative: Kirsch, Susan Edith

(57) **Abstract**

A process for the manufacture of a food product wherein particles of one or more foodstuffs are sintered together by the application of pressure, each foodstuff to be sintered having a significant ice or solid fat content such that on the application of pressure the particles bind together.

## Description

### Technical Field of the Invention

The invention relates to a process for the preparation of a foodstuff, in particular the foodstuff is an ice confection such as ice cream or water ice.

### Background to the Invention

There is an increasing need to be able to provide novel food products. In particular, in the field of ice confections it is desirable to be able to provide products having a novel appearance and/or texture.

It is especially desirable to be able to provide a water ice that has a low calorific content and yet is of a soft texture. Such a water ice has the advantage of being particularly refreshing.

However if a low calorie containing water ice is manufactured in the conventional way a very hard block of ice is achieved which is not acceptable to the consumer.

We have now been able to address all of the above mentioned problems.

### Disclosure of the Invention

Accordingly the invention provides a process for the manufacture of a food product wherein particles of one or more foodstuffs are sintered together by the application of pressure, each foodstuff to be sintered having a significant ice or solid fat content such that on the application of pressure the particles bind together.

Any food component that will melt when subjected to pressure can be sintered. In particular any food product with a significant ice content or solid fat content can be sintered. Preferably the foodstuff is selected from water ice, ice cream, chocolate, frozen vegetables, frozen fruit and mixtures thereof. Preferably the foodstuff is a water ice.

Particles of one or more foodstuff are bound together to form a product by the application of pressure. The pressure applied can be any suitable pressure such that the required level of cohesion is achieved between the individual particles. The minimum possible pressure to achieve cohesion will depend on the ice content/solid fat content of the foodstuff and the particle size. Typically the lowest suitable pressure will be approximately 20kN or above.

The higher the pressure used to bind the particles of foodstuff the lower the air content between the individual particles within the final product and therefore the less porous the final structure will be.

The ice particle size used can be any size as required to achieve the desired end product. Typically a particle size of from 0.1 to 10mm will be suitable, preferably from 1 to 5mm. The size of the particle used will influence the final texture achieved. The larger the particle size then the higher the porosity for the pressure used.

The particle of foodstuff may be achieved by any suitable method. For example a block of frozen water ice may be milled to provide the required particles. Alternatively particles may be provided by adding a liquid dropwise into liquid nitrogen to provide approximately spherical particles.

Usually the particles will be approximately spherical in shape, however the invention is not restricted to spherical shaped particles and any desired particle shape or mixture of particle shapes may be used.

A variety of interesting textures, flavours and product appearances can be achieved by sintering together particles of different flavours, shapes, foodstuffs, and colours.

A particular advantage of the proposed process is that high quality products containing CO₂-water clathrate-containing particles may be provided. Products containing CO₂-water clathrate-containing particles are known. However in these products the CO₂-water clathrate-containing particles are in contact with a liquid medium and this destabilises the clathrate. Advantageously particles of CO₂-water clathrate may be included in the mixture of particles to be sintered together. The CO₂-water clathrate-containing particles are thus located in a dry system and are therefore much more stable. EP 201 143 (Unilever) discloses a suitable method of manufacture of the CO₂-water clathrate-containing particles.

If desired the air located between the sintered particles may optionally be replaced by a liquid medium.

In a particular embodiment of the invention water ice particles having a low solids content (1% or less sugar) are sintered together to provide a high quality, low calorie product. The low solids content water ice particles may be made by any suitable method, for example milling a frozen block of water ice or by dropping the water ice solution into liquid nitrogen.

### Examples

### Example 1

Water ice particles of from 2 to 5 mm in size having two different formulations as detailed below were prepared either by dropping the water ice solution into liquid nitrogen or by freezing individual water ice solution droplets in various shapes and sizes in a freezer.

| Blackcurrant Ice Particles | %w/w |
|---|---|
| Locust Bean Gum | 0.25 |
| Blackcurrant concentrate | 3.00 |
| Sucrose | 8.00 |
| Citric Acid (Anhydrous) | 0.50 |
| Flavourings | 1.00 |
| Colourings | 1.00 |
| Sodium Citrate Dihydrate | 0.20 |
| Water | to 100 |

| Lemon Ice Particles | |
|---|---|
| Sucrose | 8.00 |
| Locust Bean Gum | 0.25 |
| Citric Acid (Anhydrous) | 0.60 |
| Sodium Citrate Dihydrate | 0.20 |
| Flavourings | 0.10 |
| Lemon Concentrate | 3.50 |
| Water | to 100 |

A mixture of particles (1:1 ratio) was sintered together with a force of from 20 to 30kN, in a disc shape mould of 75mm diameter and 20mm height.

Once the particles had been sintered together a lemon sauce having the following formulation was introduced into the air space between the ice particles

| Lemon Sauce | %w/w |
|---|---|
| Sucrose | 14.00 |
| Fructose | 3.00 |
| Locust Bean Gum | 0.10 |
| Lemon Concentrate | 6.00 |
| Flavourings | 0.10 |
| Sodium Citrate Dihydrate | 0.40 |
| Water | to 100 |

The product was then frozen and stored. A juicy and very refreshing product was achieved.

### Example 2

A lemon water ice mixture having the following formulation was pasteurised, cooled and then frozen into suitable size blocks for milling into particles of 2 to 5 mm in size.

| Lemon Ice Particles | %w/w |
|---|---|
| Fructose | 4.500 |
| Aspartame | 0.074 |
| LBG | 0.250 |
| Citric Acid | 0.500 |
| Lemon flavouring | 0.400 |
| Colouring | 0.020 |
| Water | to 100 |

CO₂-water clathrate blocks prepared according to EP 201 143 were milled into 2 to 5mm size particles. These were then dry blended with the lemon ice particles above in a 85:15 ratio. The blend of the ice particles and CO₂-water clathrate were sintered together with a force of 20 to 30 kN in a disc shape mould of 75mm diameter and 20mm height.

### Example 3

A very low calorie ice mixture was prepared having the formulation given below

| Lemon ice particles | %w/w |
|---|---|
| Lemon flavour | 0.100 |
| Colouring | 0.020 |
| Aspartame | 0.225 |
| Citric Acid | 0.500 |
| Water | to 100 |

The mixture was pasteurised, cooled and then frozen into suitable size blocks for milling into ice particles of 2 to 3 mm in size.

The particles were then sintered together with a force of from 20 to 30kN in a disc shape mould of 75mm diameter and 20mm height.

## Claims

1. A process for the manufacture of a food product wherein particles of one or more foodstuffs are sintered together by the application of pressure, each foodstuff to be sintered having a significant ice or solid fat content such that on the application of pressure the particles bind together.

2. A process according to claim 1 wherein the pressure applied is approximately 20kN or above.

3. A process according to claim 1 or 2 wherein the foodstuff is selected from water ice, ice cream, chocolate, frozen vegetable, frozen fruit and mixtures thereof.

4. A process according to any preceding claim wherein CO₂ - water clathrate-containing particles are included in addition to the particles of foodstuff.

5. A process according to any preceding claim wherein the foodstuff particle is manufactured by adding a liquid dropwise into liquid nitrogen.
